## Europäisches Patentamt
## European Patent Office
## Office européen des brevets

(11) Veröffentlichungsnummer: **0 058 305**
**B1**

(12) # EUROPÄISCHE PATENTSCHRIFT

(45) Veröffentlichungstag der Patentschrift:
12.09.84

(51) Int. Cl.³: **F 04 D 27/02, G 05 B 15/02**

(21) Anmeldenummer: **82100360.5**

(22) Anmeldetag: **20.01.82**

(54) **Steuerung von Turboverdichtern zum Verhindern des Pumpens.**

(30) Priorität: **14.02.81 DE 3105376**

(43) Veröffentlichungstag der Anmeldung:
**25.08.82 Patentblatt 82/34**

(45) Bekanntmachung des Hinweises auf die Patenterteilung:
**12.09.84 Patentblatt 84/37**

(84) Benannte Vertragsstaaten:
**CH DE FR GB IT LI NL**

(56) Entgegenhaltungen:
**DE - A - 2 116 758
DE - A - 2 623 899
GB - A - 1 257 779
GB - A - 1 262 711
GB - A - 2 002 451
US - A - 3 797 233
US - A - 4 142 838**

(73) Patentinhaber: **Maschinenfabrik Augsburg-Nürnberg Aktiengesellschaft,
Bahnhofstrasse 66 Postfach 11 02 40,
D-4200 Oberhausen 11 (DE)**

(72) Erfinder: **Albers, Rudolf, Dinnendahlstrasse 61,
D-4200 Oberhausen 11 (DE)**
Erfinder: **Blotenberg, Wilfried, Hasenstrasse 20,
D-4200 Oberhausen 12 (DE)**

ACTORUM AG

# Beschreibung

Die Erfindung betrifft ein Verfahren zur Steuerung von Turboverdichtern, insbesondere grossen Turboverdichtern, bei denen der Durchfluss oder ein aus dem Durchfluss abgeleitetes Signal und der Förderdruck bzw. das Verdichtungs-Druckverhältnis kontinuierlich gemessen und mit zulässigen Werten verglichen werden, wobei zur Verhinderung des Pumpens, d.h. vor dem Erreichen der Pumpgrenze, beim Erreichen einer zur Pumpgrenze parallel verlaufenden Abblaselinie, regelgesteuert durch Öffnen von Abblaseventilen sichergestellt wird, dass der Verdichterdurchfluss einen vom Druckverhältnis abhängigen minimalen Wert nicht unterschreitet.

Derartige Pumpgrenzregelungen wurden bereits unter Verwendung von mechanisch-hydraulischen Reglern vorgenommen. Trotz hohen gerätetechnischen Aufwands ist es bei den bekannten Regelungen jedoch nicht möglich, den Verlauf der Pumpgrenze exakt nachzubilden, um ein Pumpen sicher zu verhindern. Ein weiterer Nachteil liegt in dem hohen Wartungsaufwand und der erheblichen Störanfälligkeit dieser mechanisch-hydraulischen Regeleinrichtungen.

Es ist auch bereits bekannt, eine elektronische Pumpgrenzregelung einzusetzen, siehe Mitteilung 542 der Wärmestelle des Vereins deutscher Eisenhüttenleute. Die Pumpgrenzregelung an Verdichtern mit Leitschaufelverstellung ist dabei ähnlich der von Verdichtern mit Drosselverstellung aufgebaut, wobei allerdings der Unterschied besteht, dass wegen der nichtlinearen Pumpgrenzkurve ein Funktionsgeber zur Bildung der Führungsgrösse des Pumpgrenzreglers vorgesehen ist.

Als nachteilig hat sich bei diesen bekannten Regelungen gezeigt, dass unter bestimmten Betriebsbedingungen, z.B. bei einem Steuereingriff von Hand in die Regelung und bei starken Druckschwankungen das Pumpen des Verdichters nicht sicher genug verhindert werden kann.

Es ist weiterhin aus der Offenlegungsschrift 2623899 bereits bekannt, eine elektronische Pumpgrenzregelung einzusetzen, bei welcher die von den Druck-Durchfluss-Istwerten abhängige Regeldifferenz des die Abblaseventile verstellenden Pumpgrenzreglers nichtlinear verstärkt wird, derart, dass die Verstärkung erhöht wird, wenn die Regeldifferenz negativ wird, d.h. wenn sich der Betriebsdruck des Verdichters in den unzulässigen Bereich jenseits der Abblaselinie bewegt. Weiterhin ist hier eine Extremwertauswahl dem Regler vorgeschaltet, welche die grösste Regelabweichung, nämlich die eigentliche Regelabweichung oder die Differenz zwischen Reglerausgang und Handsteuerbefehl berücksichtigt.

Bei dieser sehr gut arbeitenden Regelung ist allerdings nachteilig, dass die Änderungsgeschwindigkeit des Istwertes nicht berücksichtigt werden kann bzw. dass nicht berücksichtigt werden kann, ob die Istwert-Abweichung grösser oder kleiner wird. Praktisch bedeutet das, dass unabhängig von dem Betriebszustand die Abblaselinie konstant eingestellt bleibt.

Es ist ausserdem noch ein Regelverfahren bekannt, bei dem die Lage der Abblaselinie im Kennfeld abhängig gemacht wird von der Geschwindigkeit, mit der sich der Arbeitspunkt im Kennfeld bewegt.

Nachteilig ist bei einer solchen oder ähnlichen Schaltung aber, dass die rein analog arbeitenden Schaltungselemente einen sehr hohen technischen Aufwand erfordern, wenn verschiedene zusätzliche Parameter, wie Ansaugtemperatur, -druck, -feuchtigkeit oder Molekulargewicht berücksichtigt werden sollen oder die Abblaselinie eine Form aufweist, die analog schwierig nachzubilden ist.

Aufgabe der Erfindung ist es daher, ein Verfahren zum Betreiben von Turboverdichtern zu finden, bei dem die vorgenannten Nachteile nicht mehr auftreten und das es bei geringem Aufwand sicherstellt, dass nicht nur beliebige Parameter berücksichtigt werden können, sondern dass auch schwierig nachzubildende Abblaselinien reglerseitig exakt bestimmt werden können.

Im folgenden wird ein Ausführungsbeispiel der Erfindung anhand von Zeichnungen näher erläutert. Es zeigen dabei:

Fig. 1 das Volumen-Druckdiagramm mit den Linien der Pumpgrenze P, der optimalen Abblaselinie A und der Basisabblaselinie B, und

Fig. 2 die schematische Schaltung zur Durchführung des erfindungsgemässen Verfahrens.

Das System besteht aus einer Basisregelung, dargestellt durch die Wandler 10 und 11, dem Funktionsgeber 8, der Extremwertauswahl 3, dem Regler 2, dem Wandler 1 sowie dem Handsteuerintegrator 7 mit den Tastern 9 und der Rechenschaltung 6 mit den Trennwandlern 4 und 5.

Der Rechenschaltung 6 werden alle Parameter eingegeben, die zur optimalen Anpassung der Abblaselinie an die Pumpgrenze erforderlich sind (Temperaturkorrektur, Zustandsgrössenkorrektur für Durchflussmessung, Feuchte, Molekulargewicht, Druckverhältnis sowie sonstige interessierende Grössen).

Die Rechenschaltung vergleicht die Lage der Abblaselinie in der Basisregelung mit der in der Rechenschaltung errechneten optimalen Abblaselinie und prägt der Basisregelung eine Korrekturgrösse K auf, so dass der Ausgang des Basisreglers 2 die Maschine in den optimalen Arbeitspunkt führt.

Bei einem Defekt an der Rechenschaltung 6 schaltet diese ab, die Korrekturgrösse K wird null und die Maschine wird auf der sicheren Seite mit der Basisregelung allein weiterbetrieben. Die Teilung erhöht dabei die Sicherheit und Verfügbarkeit, wenn das Ausgangssignal der Rechenschaltung auf Plausibilität oder Wahrscheinlichkeit untersucht wird.

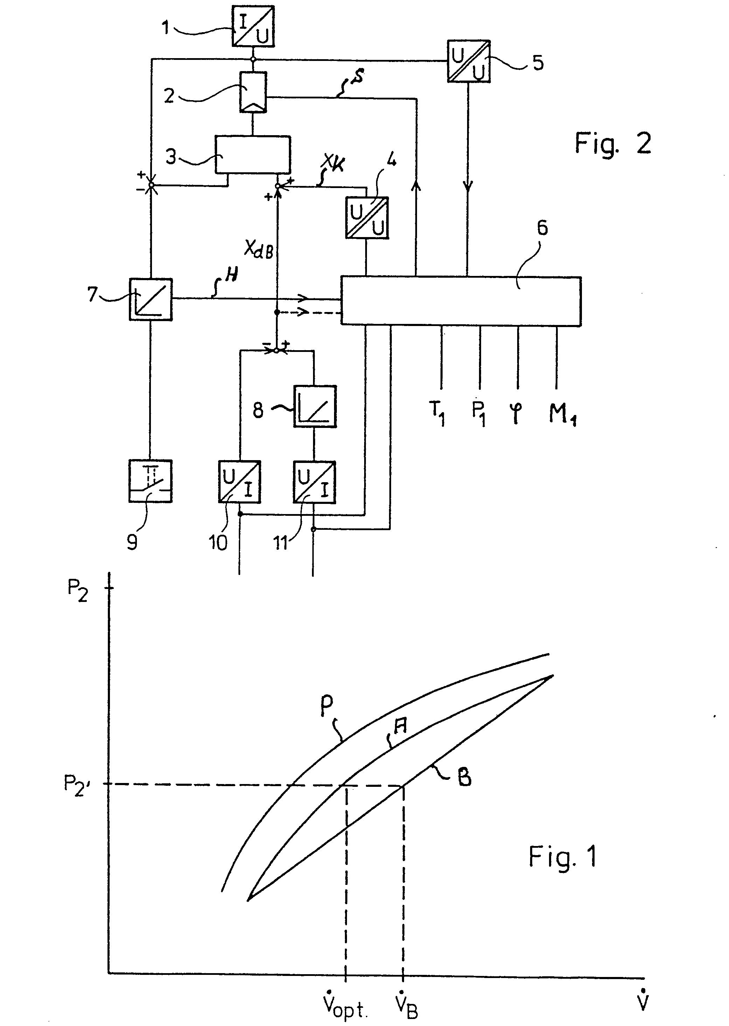

Die Funktion wird am Beispiel anhand Fig. 1 erläutert. Beim Enddruck $P_2$ ergibt sich in der Basisregelung der Volumenstrom $\dot{V}_B$ an der Abblaselinie. Die Abblaseventile werden durch den Basisregler 2 derart ausgeregelt, dass der Istdurchfluss $\dot{V}_{ist}$ dem Solldurchfluss $\dot{V}_B$ entspricht. Die Regeldifferenz

$$X_{dB} = \dot{V}_B - \dot{V}_{ist}$$

ist null.

Die Rechenschaltung 6 errechnet den optimalen Solldurchfluss $V_{opt}$. Sie bildet daraus die Korrekturgrösse

$$X_K = \dot{V}_{opt} - \dot{V}_{ist} - X_{dB}$$

Diese Grösse wird der Regeldifferenz $X_{dB}$ aufaddiert, so dass der Basisregler 2 die Abblaseventile so lange verstellt, bis seine Eingangsgrösse null ist, d.h. bis $\dot{V}_{ist} = \dot{V}_{opt}$.

Ein anderes Verfahren besteht darin, dass in der Rechenschaltung die Basisabblaselinie abgespeichert ist. Es entfällt dann die Übergabe von $X_B$ aus der Basisregelung, da diese Grösse in der Rechenschaltung gebildet werden kann.

Als Rechenschaltung bietet sich ein Mikrorechner an. Durch den Einsatz von Mikroprozessoren wird der Techniker dabei in die Lage versetzt, bisher nicht lösbare Aufgaben dank der digitalen Verarbeitung mit einfachen Mitteln zu bewältigen.

Bei einer Abblaseregelung für Turboverdichter sind eine Reihe von mathematischen Funktionen zu lösen, es sind Trendanalysen zu erstellen und nichtlineare Kennlinien sind zu speichern.

Hierzu bietet sich ein digitaler Mikrorechner an.

Leider besitzen derartige Systeme heute noch nicht die Systemzuverlässigkeit, wie sie für den industriellen Einsatz an Turbokompressoren erforderlich sind.

Es bietet sich deshalb eine kombinierte Abblaseregelung an. Dabei werden alle komplizierten Rechenaufgaben digital im Mikrorechner gelöst, während ein analoger Back-Up-Regler (Basisregler), der auch allein den Maschinenschutz gewährleisten kann, die erforderliche Zuverlässigkeit gewährleistet.

Der Basisregler ist einfach aufgebaut. Der Sollwert wird aus dem Enddruck gebildet. Die Abblaselinie wird durch eine Gerade dargestellt. Auf eine Zustandsgrössenkorrektur des Istwertes kann oftmals verzichtet werden, ebenso auf eine Korrektur des Einflusses der Ansaugtemperatur. Die Abblaselinie wird so eingestellt, dass in allen Arbeitspunkten und unter allen Betriebsbedingungen ein ausreichender Maschinenschutz gewährleistet ist. Das hat zur Folge, dass meistens mit einem unnötig grossen Abstand zwischen Pumpgrenze und Abblaselinie gefahren wird.

Die Handverstellung der Abblaseventile wird in der bisher bekannten Art ebenfalls analog durchgeführt.

Fällt nun der Mikrorechner aus, wird die Korrekturgrösse $X_K$ zu null, es stellt sich der Arbeitspunkt $\dot{V}_{ist} = \dot{V}_B$ ein.

Diese Schaltung hat den Vorteil, dass nur ein Regler, der Basisregler, verwendet wird, der immer im Eingriff ist. Es werden dadurch alle Umschalt- und Einschwingprobleme umgangen.

Falls der Mikrorechner höhere Regelalgorithmen realisieren soll, die mit einem analogen PI-Regler kollidieren, ist eine etwas geänderte Struktur möglich. Hierzu wird bei eingeschaltetem Mikrorechner der Integralanteil im Basisregler abgeschaltet. Der Regler arbeitet dann nur noch als Proportionalverstärker. Der Mikrorechner vergleicht den Ausgang des analogen Basisreglers mit dem Ausgang des Digitalreglers und verstellt die Korrekturgrösse $X_K$ soweit, dass beide Reglerausgänge identisch sind.

Die Schaltung des Mikrorechners kann die Berücksichtigung des umgekehrten Zeitverhaltens des Reglers enthalten, so dass die Strukturumschaltung des Reglers dann entfallen kann.

Hierbei ist es erforderlich, dass bei Eingriff der Handverstellung der Mikrorechner ausgeschaltet wird. Dieser Befehl kann entweder vom Handsteuerintegrator oder von einem Vergleich des Ein-/Ausgangs der Extremwertauswahl abgegriffen werden.

Eine Angleichsschaltung in der Rechenschaltung sorgt dafür, dass beim Eingriff der Handverstellung sowie beim Einschalten der Rechenschaltung keine Sprünge auftreten.

Die Auslegung der Schaltung zur Durchführung des erfindungsgemässen Verfahrens ist aus Fig. 2 ersichtlich, wobei der Fachmann auch ersichtlicherweise Abwandlungen vornehmen kann. Die Funktion der Schaltung ist für den Fachmann unter Berücksichtigung der Bezeichnungen für die einzelnen verwendeten Blöcke selbstverständlich.

1 Spannungs-Stromwandler
2 Regler
3 Extremwert-Auswahl
4 Trenner
5 Trenner
6 Rechenschaltung
7 Handsteuerintegrator
8 Funktionsgeber
9 Handtaster
10 Strom-Spannungswandler für Durchfluss-Messung (saugseitig)
11 Strom-Spannungswandler für Druck-Messung (hinter Verdichter)
H Handgriff
$X_K$ Korrekturgrösse
S Strukturumschaltung des Reglers
P Pumpgrenze
A optimale Abblaselinie
B Basisabblaselinie

Der Korrekturwert bzw. die Korrekturgrösse $X_K$ kann sowohl auf den Sollwert als auch auf die Istwertgrösse aufgeschaltet werden (unter Berücksichtigung des Vorzeichens) und es kann in vielen Anwendungsfällen vorteilhaft statt der elektronischen Analogregelung die Basisregelung auch pneumatisch oder hydraulisch ausgeführt sein. Da die Basisregelung nur entlang einer Geraden regelt, also eine Linearregelung erfolgt, ist die mechanische bzw. pneumatische oder hydraulische Basisregelung einfach und zweckmässig durchführbar. Entscheidend ist die Beibehaltung der erfindungsgemässen Lösung, nämlich eine Teilung in Basis- und Korrekturregelung vorzunehmen und damit nicht nur eine verbesserte Regelung zu erreichen, sondern bei Ausfall oder Störung der Rechenglieder ein Pumpen noch immer sicher zu vermeiden.

Die erfindungsgemässe Schaltung ist weiterhin auch in der Lage, eine wünschenwerte Korrektur der rechnerischen Pumpgrenze vorzunehmen:

Tritt ein Pumpstoss auf, so werden die Betriebsdaten im Pumppunkt erfasst und gespeichert. Aus dem gemessenen Enddruck wird der zugehörige Punkt auf der Abblaselinie ermittelt. Aus dem eingestellten Sicherheitsabstand zwischen Pumpgrenze und Abblaselinie, der ebenfalls abgespeichert ist, wird der zugehörige Durchfluss an der Pumpgrenze ermittelt. Bei einer Abweichung zwischen dem errechneten und dem gemessenen Durchfluss wird die Abblaselinie um diese Differenz verstellt. Dabei können die gemessenen Werte des Pumppunktes zuvor auf Plausibilität überwacht werden. So kann z.B. eine Korrektur dann unterbleiben, wenn bestimmte, im Normalbetrieb äusserst selten vorkommende Störfälle auftreten. Die Schaltung kann auch so aufgebaut sein, dass eine Korrektur erst dann erfolgt, wenn mehrere Pumpstösse die gleiche Tendenz zeigen.

## Patentansprüche

1. Verfahren zur Steuerung von Turboverdichtern, insbesondere grossen Turboverdichtern, bei denen der Durchfluss oder ein aus dem Durchfluss abgeleitetes Signal und der Förderdruck bzw. das Verdichtungs-Druckverhältnis kontinuierlich gemessen und mit zulässigen Werten verglichen werden, wobei zur Verhinderung des Pumpens, d.h. vor Erreichen der Pumpgrenze beim Erreichen einer zu dieser parallel verlaufenden Abblaselinie reglergesteuert durch Öffnen von Abblaseventilen sichergestellt wird, dass der Verdichterdurchfluss einen vom Förderdruck abhängigen minimalen Wert nicht unterschreitet, dadurch gekennzeichnet, dass ein einfach aufgebauter Analogregler als Basisregelung die Abblaselinie als Gerade berücksichtigt, die im Volumen-Druckdiagramm unterhalb der optimalen Abblaselinie verläuft, wobei durch ein Korrektursignal in einer separaten Rechenschaltung die Abblaselinie an den exakten Verlauf der Pumpgrenze angepasst wird und der Basisregelung Korrekturgrössen aufgeschaltet werden.

2. Verfahren nach Anspruch 1, dadurch gekennzeichnet, dass der Rechenschaltung zur Bildung des Korrektursignals noch die Daten weiterer Korrekturgrössen, wie Zustandsgrössenkorrektur der Durchflussmessung, Temperatur, Ansaugdruck, Taupunkt und Molekulargewicht des angesaugten Mediums eingegeben werden.

3. Verfahren nach Anspruch 1 oder 2, dadurch gekennzeichnet, dass die Rechenschaltung hinsichtlich der Wahrscheinlichkeit oder Plausibilität des Korrektursignals dieses überwacht und die Rechenschaltung zur Abgabe der Korrekturgrösse abgeschaltet wird, wenn das Ergebnis der Überwachung negativ ist.

4. Verfahren nach einem der Ansprüche 1 bis 3, dadurch gekennzeichnet, dass die Rechenschaltung Einrichtungen enthält, die den zeitlichen Verlauf des Arbeitspunktes im Kennfeld beobachten und daraus bei einer unzulässig schnellen Annäherung an die Pumpgrenze Steuereingriffe vornehmen.

5. Verfahren nach einem der Ansprüche 1 bis 4, dadurch gekennzeichnet, dass beim Auftreten eines Pumpstosses die Betriebsdaten während des Pumpstosses gespeichert und auf Plausibilität überprüft werden, wobei bei Vorliegen einer Abweichung von der theoretischen, in der Rechenschaltung gespeicherten Pumpgrenze diese und die optimale Abblaselinie entsprechend korrigiert werden.

6. Verfahren nach einem der Ansprüche 1 bis 5, dadurch gekennzeichnet, dass die Rechenschaltung durch einen Mikrorechner (Mikroprozessor) realisiert wird.

## Claims

1. A method of controlling turbo compressors, particularly large turbo compressors, wherein the throughflow or a signal derived from the throughflow and the conveying pressure or the compression-pressure ratio are continuously measured and compared with reliable values, whereby in order to prevent pumping, i.e. prior to the pumping limit being attained and upon attaining a blow-off line extending parallel therewith, the controlled opening of blow-off valves ensures that the compressor throughflow does not fall below a minimum level dependent upon the conveying pressure, characterised in that a simply constructed analogue controller takes into account as its control datum a blow-off line which is a straight line and which, in the volume-pressure diagram, extends below the optimum blow-off line, a correction signal in a separate calculator circuit adapting the blow-off line to the exact pattern of the pump limit, correcting values being applied to the control datum.

2. A method according to Claim 1, characterised in that the calculator circuit for forming the correction signal also has fed to it data concerning further correction magnitudes, such as condition of throughflow measurement, temperature, intake pressure, dew point and molecular weight of the indrawn medium.

3. A method according to Claim 1 or 2, characterised in that the calculator circuit monitors the correction signal with regard to probability or plausibility and in that the calculating circuit for delivering a correction magnitude is shut down if the result of such monitoring is negative.

4. A method according to one of Claims 1 to 3, characterised in that the calculating circuit comprises means for observing the time-related pattern of the working point in the characteristic field, intervening in the control in the event of an unacceptably rapid approximation to the pump limit.

5. A method according to one of Claims 1 to 4, characterised in that if a pump surge occurs, the operating data during the pump surge are stored and checked for plausibility so that if there is a deviation from the theoretical pump limit stored in the calculator circuit, this and the optimum blow-off line are corrected accordingly.

6. A method according to one of Claims 1 to 5, characterised in that the calculating circuit is provided by a microcomputer (microprocessor).

## Revendications

1. Procédé pour la commande de turbo-compresseurs, notamment de turbo-compresseurs de grandes dimensions, dans lesquels le débit ou un signal dérivé du débit, ainsi que la pression de refoulement ou le rapport de compression sont mesurés en continu et comparés avec des valeurs admissibles, tandis que pour empêcher le pompage, c'est-à-dire avant que soit atteinte la limite de pompage, et lorsque est atteinte une courbe de purge parallèle à cette limite, il est garanti par l'ouverture de soupapes de purge, sous le contrôle d'une régulation, que le débit du compresseur ne tombe pas au-dessous d'une valeur minimale dépendante de la pression de refoulement, procédé caractérisé en ce qu'un régulateur analogique de construction simple fait intervenir comme régulation de base la courbe de purge sous la forme d'une droite s'étendant sur le diagramme volume-pression au-dessous de la courbe de purge optimale, la courbe de purge étant alors adaptée, dans un circuit de calcul séparé, au tracé exact de la limite de pompage par un signal de correction, et les valeurs de correction étant superposées à la régulation de base.

2. Procédé selon la revendication 1, caractérisé en ce qu'en outre, les données d'autres grandeurs de correction, telles que la correction des grandeurs d'état de la mesure du débit, la température, la pression d'aspiration, le point de rosée et le poids moléculaire du fluide aspiré, sont introduites dans le circuit de calcul pour l'établissement du signal de correction.

3. Procédé selon l'une des revendications 1 ou 2, caractérisé en ce que le circuit de calcul surveille le signal de correction en ce qui concerne la vraisemblance ou la plausibilité de celui-ci et le circuit de calcul ne peut délivrer le signal de correction si le résultat de la surveillance est négatif.

4. Procédé selon l'une des revendications 1 à 3, caractérisé en ce que le circuit de calcul comprend des moyens qui observent l'évolution dans le temps du point de fonctionnement et qui, à partir de ces observations, entreprennent des actions de commande lors d'un rapprochement inadmissiblement rapide de la limite de pompage.

5. Procédé selon l'une des revendications 1 à 4, caractérisé en ce que, lorsqu'il se produit un à-coup de pompage, les données de fonctionnement pendant cet à-coup de pompage sont mémorisées et leur plausibilité est contrôlée, et au cas où il existe un écart avec la limite de pompage théorique mémorisée dans le circuit de calcul, celle-ci est corrigée, ainsi que la courbe optimale de purge.

6. Procédé selon l'une des revendications 1 à 5, caractérisé en ce que le circuit de calcul est constitué par un microcalculateur (microprocesseur).

Fig. 2

Fig. 1